# EUROPEAN PATENT APPLICATION

(11) **EP 1 761 074 A1**
(43) Date of publication of application: **07.03.2007**
(21) Application number: 06005428.5
(22) Date of filing: 16.03.2006
(51) Int. Cl.: H04N 9/31, G02F 1/13357, G02B 27/28

(54) **Colour-sequential projection system**

(30) Priority: 01.09.2005 JP 2005253709
(71) Applicant: Olympus Optical Corporation Limited, Tokyo 151-0072 (JP)
(72) Inventor: Sakai, Hiroshi Intellectual Property Support Dept, Hachioji-shi Tokyo 192-8512 (JP); Yamanaka, Kazuya Intellectual Propert.Support Dept, Hachioji-shi Tokyo 192-8512 (JP); Ito, Hideyuki Intellectual Property Support Dept, Hachioji-shi Tokyo 192-8512 (JP)
(74) Representative: von Hellfeld, Axel

(57) **Abstract**

An image display device includes a light source unit (100) which successively emits illumination lights of different colors which have wavelength bands different from one another in accordance with color information of an image signal, an image modulating unit (200) which successively modulates the illumination lights of different colors in accordance with the color information of the image signal and generates modulated lights, a light path shift unit (300) capable of shifting a light path of the modulated lights, and a projection optical unit (400) which projects the modulated lights, wherein the light path shift unit includes a first wavelength selectable polarization rotation device (310) configured to carry out rotation control on polarization directions of the modulated lights modulated by the image modulating unit in accordance with colors and a first birefringent plate (320) to which the modulated lights from the first wavelength selectable polarization rotation device are applied.

## Description

The present invention relates to an image display device.

As a technique to obtain a high-resolution image projection device (image display device) using display elements (LCD, etc.) with limited number of pixels, a wobbling technique is known. The wobbling technique carries out pixel shift using a light path shift module composed of a polarization rotation liquid crystal cell and a birefringent plate.

In the wobbling technique, the shift timing of light beam is decided in accordance with ON/OFF of the polarization rotation liquid crystal cell. Consequently, it is important to match the ON/OFF timing of the polarization rotation liquid cell to the display timing of the display device. However, the response speed of the polarization rotation liquid crystal cell is not so fast. For this reason, in a transition periods from OFF to ON and from ON to OFF of the liquid crystal cell (rise period and fall period), both shift light and non-shift light are emitted from the light path shift module. Consequently, in the transition period, light beam also reaches a pixel position adjacent to a proper pixel position, giving rise to problems such as color leakage, etc.

As against this kind of problem, for example, Jpn. Pat. Appln. KOKAI Publication No. 2002-281517 discloses a technique in which red (R) and blue (B) are displayed in the first period and the last period of one frame, and in the period therebetween, green (G) is displayed. Thereby, it is possible to prevent the display of green (G) with high spectral luminous efficiency from being superimposed in the transition period of the polarization rotation liquid crystal cell. Consequently, it is possible to reduce effects of leakage light. Since displays of red (R) and blue (B) are superimposed during the transition period, however, effects of leakage light cannot be successfully suppressed. As a result, the effects of leakage light gives rise to a problem of a so-called false color.

In this way, in the image display device using the wobbling technique, a problem of generating the false color existed due to the effects of leakage light during the transition period of the polarization rotation liquid crystal cell. Therefore, it has been difficult to display high-quality images.

It is an object of the present invention to provide an image display device which can suppress effects of leakage light and can display high-quality images.

According to an aspect of the present invention, there is provided an image display device for displaying an image in accordance with an input image signal, comprising: a light source unit which successively emits illumination lights of different colors which have wavelength bands different from one another in accordance with color information of an image signal; an image modulating unit which successively modulates the illumination lights of different colors in accordance with the color information of the image signal and generates modulated lights; a light path shift unit capable of shifting a light path of the modulated lights modulated by the image modulating unit; and a projection optical unit which projects the modulated lights from the light path shift unit, wherein the light path shift unit includes a first wavelength selectable polarization rotation device configured to carry out rotation control on polarization directions of the modulated lights modulated by the image modulating unit in accordance with colors and a first birefringent plate to which the modulated lights from the first wavelength selectable polarization rotation device are applied.

In the image display device, it is preferable that the light source unit includes a white light source which emits white light and a color wheel in which a plurality of color filters having different wavelength bands are arranged in the rotating direction, and by applying the white light to the color filters as the color wheel rotates, the illumination lights of different colors are successively emitted from the color wheel.

In the image display device, it is preferable that the first wavelength selectable polarization rotation device switches colors to undergo rotation control on the polarization direction in accordance with colors of the illumination lights emitted from the light source unit.

In the image display device, it is preferable that the first wavelength selectable polarization rotation device comprises a stack of layers which perform rotation control on the polarization directions of lights of different colors, respectively.

In the image display device, it is preferable that the first wavelength selectable polarization rotation device switches rotation control on the polarization direction for a certain color when the light source unit does not emit the illumination light of the certain color.

In the image display device, it is preferable that the two polarization directions of modulated light to undergo rotation control by the first wavelength selectable polarization rotation device are substantially vertical to each other.

In the image display device, it is preferable that the light path shift unit further includes: a second wavelength selectable polarization rotation device configured to carry out rotation control on polarization directions of the modulated lights emitted from the first birefringent plate in accordance with colors; and a second birefringent plate to which the modulated lights from the second wavelength selectable polarization rotation device are applied, two polarization directions of modulated light to undergo rotation control by the second wavelength selectable polarization rotation device are substantially parallel to two polarization directions of modulated light to undergo rotation control by the first wavelength selectable polarization rotation device, respectively, and a crystal axis of the first birefringent plate and a crystal axis of the second birefringent plate are substantially vertical to each other.

In the image display device, it is preferable that a band width of each color of the illumination light emitted from the light source unit is narrower than that of each color to undergo rotation control on the polarization direction by the first wavelength selectable polarization rotation device.

In the image display device, it is preferable that the light source unit has an LED light source which emits illumination light of at least three colors.

In the image display device, it is preferable that the light source unit has a white light source which emits white light, each of wavelength bands of colors to undergo rotation control on the polarization direction by the first wavelength selectable polarization rotation device overlaps the other one of the wavelength bands, and the white light source has no bright line spectrum at the overlapped portion.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a general configuration of an image projection device according to a first embodiment of the present invention;
FIG. 2 is a diagram showing a configuration of the image projection device according to the first embodiment of the invention;
FIG. 3 is a timing chart showing an operation of the image projection device according to the first embodiment of the invention;
FIGS. 4A to 4C are views for explaining operations of the image projection device according to the first embodiment of the invention;
FIG. 5 is a view schematically showing characteristics of a wavelength selectable polarization rotation device and characteristics of a light source unit according to the first embodiment of the invention;
FIG. 6 is a view showing spectral distribution characteristics of an ultrahigh pressure mercury lamp according to the first embodiment of the invention;
FIG. 7 is a diagram showing a configuration of an image projection device according to a second embodiment of the present invention;
FIG. 8 is a diagram showing a configuration of an image projection device according to a third embodiment of the present invention;
FIG. 9 is a diagram showing a configuration of an image projection device according to a fourth embodiment of the present invention;
FIG. 10 is a diagram showing a configuration of an image projection device according to a fifth embodiment of the present invention;
FIG. 11 is a diagram showing a configuration of an image projection device according to a sixth embodiment of the present invention;
FIG. 12 is a timing chart showing an operation of the image projection device according to the sixth embodiment of the invention;
FIG. 13 is a view for explaining an operation of the image projection device according to the sixth embodiment of the invention;
FIG. 14 is a view for explaining an operation of the image projection device according to the sixth embodiment of the invention;
FIG. 15 is a view for explaining an operation of the image projection device according to the sixth embodiment of the invention; and
FIG. 16 is a view for explaining an operation of the image projection device according to the sixth embodiment of the invention.

Hereinafter, embodiments of the present invention will be described in detail with reference to the accompanying drawings.

### (First Embodiment)

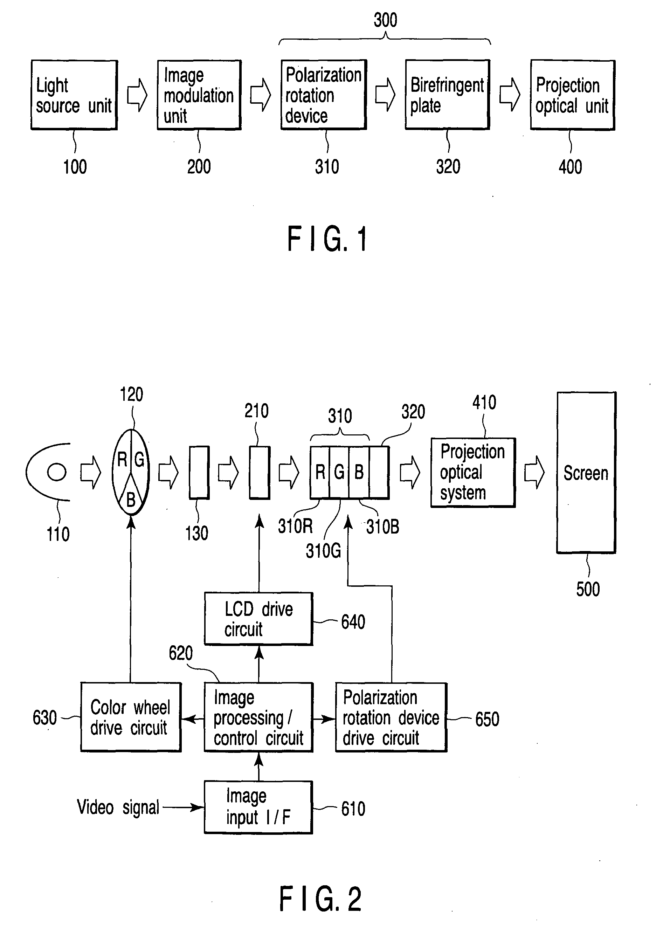

FIG. 1 is a block diagram showing a general configuration of an image projection device (image display device) according to a first embodiment of the present invention.

As shown in FIG. 1, the image projection device comprises a light source unit 100, an image modulation unit 200, a light path shift unit 300, and a projection optical unit 400.

The light source unit 100 successively emits illumination lights of different colors with wavelength bands different from one another, and is composed of, for example, a white light source and a color separation element. The image modulation unit 200 successively modulates illumination lights of different colors from the light source unit 100 in accordance with color information of image signals (video signals), and is composed of, for example, liquid crystal display device (LCD).

The light path shift unit (wobbling unit) 300 shifts a light path of modulated light modulated by the image modulation unit 200, and is composed of a wavelength selectable polarization rotation device 310 and a birefringent plate 320. The wavelength selectable polarization rotation device 310 can carry out rotation control in the polarization direction of incident light in accord with colors. For the wavelength selectable polarization rotation device 310, it is possible to use, for example, ColorSwitch (registered trademark) manufactured by ColorLink Incorporated. Note that the wavelength selectable polarization rotation device 310 itself is described in, for example, Jpn. Pat. Appln. KOKAI Publication Nos. 2001-228455 and 2003-207747, etc. The birefringent plate 320 is formed by an anisotropic crystal such as, for example, quartz (α-SiO₂), lithium niobate (LiNbO₃), rutile (TiO₂), calcite (CaCo₃), Chile saltpeter (NaNO₃), and YVO₄. The projection optical unit 400 is intended to present modulated light from the light path shift unit 300 to observers.

FIG. 2 is a diagram showing a configuration of the image projection device according to the first embodiment of the invention.

For an illumination unit 110, a white light source (UHP lamp, etc.) which emits white light is used. The light emitted from the illumination unit 110 is incident on a color wheel 120 via an illumination optical system (not shown). The color wheel 120 has red (R), green (G) and blue (B) filters arranged in the rotating direction. Rotations of the color wheel 120 cause illumination lights of R light beam, G light beam, and B light beam to successively emit from the color wheel 120. The illumination light emitted from the color wheel 120 is incident on a P/S converter (polarization conversion element) 130, and the illumination light polarization directions are aligned. Here, it is assumed that from the P/S converter 130, S-polarization illumination light is emitted.

The illumination light emitted from the P/S converter 130 is incident on a transmission type LCD 210. In the transmission type LCD 210, modulated light (image light) modulated in accordance with input video signals (input image signals) is generated. Specifically, in synchronism with R light beam, G light beam, and B light beam generation timings at the color wheel 120, R-image, G-image, and B-image are displayed on the transmission type LCD 210. As a result, R-modulated light, G-modulated light, and B-modulated light are emitted from the transmission type LCD 210. These modulated lights are synthesized in the time-axis direction. In addition, because in the transmission type LCD 210, the polarization direction of incident light rotates 90 degrees, P-polarization modulated light is emitted from the transmission type LCD 210. The modulated light emitted from the transmission type LCD 210 is incident on the wavelength selectable polarization rotation device 310.

The wavelength selectable polarization rotation device 310 can carry out rotation controls of R light beam, G light beam and B light beam independently from one another. Specifically, the wavelength selectable polarization rotation device 310 has an R element portion 310R which carries out rotation control of R light beam, a G element portion 310G which carries out rotation control of G light beam, and a B element portion 310B which carries out rotation control of B light beam, and these element portions 310R, 310G, and 310B are stacked. The element portions 310R, 310G, and 310B have the incident light polarization direction rotated 90 degrees when OFF voltage is applied, and the incident light polarization direction is maintained without being rotated when ON voltage is applied.

For example, in the case where R light beam is incident on the wavelength selectable polarization rotation device 310, only the R element portion 310R is involved with rotation control while the G element portion 310G and the B element portion 310B are not involved with rotation control. Accordingly, in the G element portion 310G and the B element portion 310B, the incident light polarization direction is maintained without rotating. Similarly, in the case where G light beam is incident on the wavelength selectable polarization rotation device 310, only the G element portion 310G is involved with rotation control while the R element portion 310R and B element portion 310B are not involved with rotation control. In addition, in the case where B light beam is incident on the wavelength selectable polarization rotation device 310, only the B element portion 310B is involved with rotation control while the R element portion 310R and the G element portion 310G are not involved with rotation control.

Modulated light (P-polarization or S-polarization) emitted from the wavelength selectable polarization rotation device 310 is incident on the birefringent plate 320. In the birefringent plate 320, shift operation is carried out for either one of P-polarization or S-polarization, and no shift operation is carried out for the other. In the present embodiment, shift operation is carried out in the case where incident light is P-polarization. The shift amount is 1/2 pixel-pitch.

Modulated light shift-controlled by the birefringent plate 320 is projected on a screen 500 via a projection optical system 410. On the screen 500, modulated light to which shift operation is carried out and modulated light on which no shift operation is carried out are synthesized. Consequently, an image which has the number of pixels double as many as the number of pixels of the transmission type LCD 210 is projected on the screen 500.

Next, a circuit block shown in FIG. 2 will be explained. Video signals (image signals) are input in an image processing/control circuit 620 via an image input interface 610. In the image processing/control circuit 620, image processings such as color correction, brightness correction, gamma correction, and aspect conversion are carried out. A color wheel drive circuit 630, an LCD drive circuit 640, and a polarization rotation device drive circuit 650 are connected to the image processing/control circuit 620. The color wheel 120 is driven by the color wheel drive circuit 630, the transmission type LCD 210 is driven by the LCD drive circuit 640, and the polarization rotation device 310 is driven by the polarization rotation device drive circuit 650. These drives are synchronized each other by the image processing/control circuit 620. Consequently, when, for example, an R-image is projected, R light beam is emitted from the color wheel 120, the R-image is displayed on the transmission type LCD 210, and drive of the R element portion 310R is controlled by the polarization rotation device 310. The same principle is applied to the G-image and B-image as well.

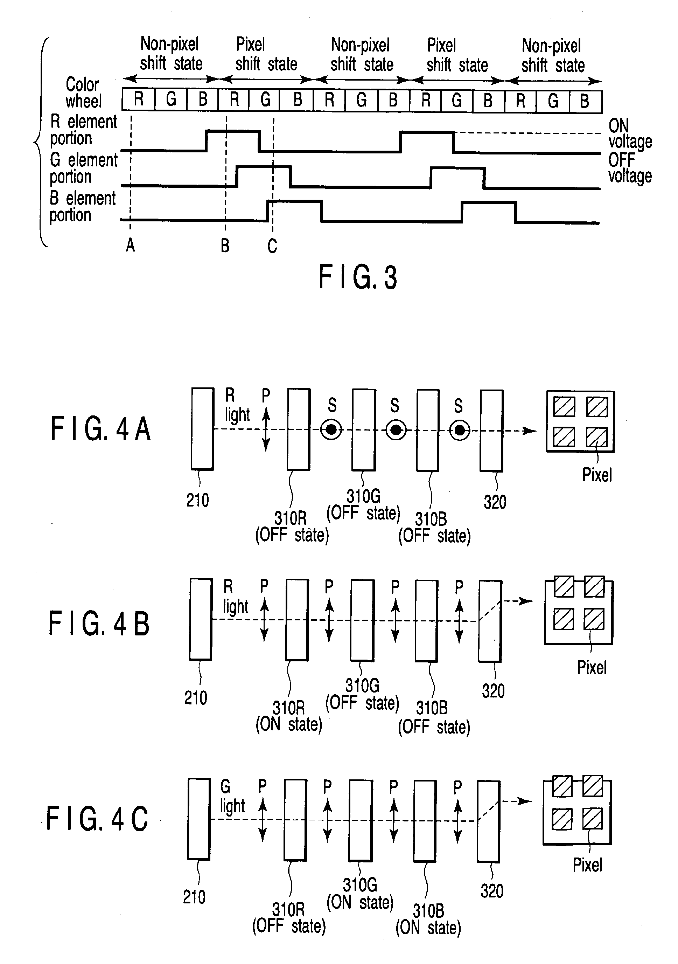

Now, the operation of the image projection device shown in FIG. 2 will be described with reference to FIGS. 3 and 4A to 4C. FIG. 3 is a timing chart, and FIGS. 4A to 4C explain the operation of the image projection device.

As shown in FIG. 3, R, G, and B illumination lights are successively emitted from the color wheel 120. In addition, in the light path shift unit composed of the wavelength selectable polarization rotation device 310 and the birefringent plate 320, control is made in such a manner as to repeat a pixel shift state and a non-pixel shift state.

For example, at point A of FIG. 3, the following operation is carried out. As shown in FIG. 4A, R light beam of P-polarization is emitted from the transmission type LCD 210. In FIGS. 4A to 4C, P-polarization denotes a polarization direction parallel to the sheet of paper, and S-polarization denotes a polarization direction perpendicular to the sheet of paper. The R light beam is first incident on the R element portion 310R of the wavelength selectable polarization rotation device 310. OFF voltage is applied to the R element portion 310R. Consequently, R light beam of P-polarization which has been incident on the R element portion 310R has the polarization direction 90 degree rotated, and R light beam of S-polarization is emitted from the R element portion 310R. The R light beam of S-polarization is incident on the G element portion 310G. The G element portion 310G is involved with only the G-light beam polarization rotation. For this reason, the R light beam of S-polarization passes through the G element portion 310G without rotating and is incident on the B element portion 310B. The B element portion 310B is involved with only the B-light beam polarization rotation. For this reason, R light beam of S-polarization passes through the B element portion 310B without rotating. Accordingly, R light beam of S-polarization is emitted from the wavelength selectable polarization rotation device 310. In the present embodiment, the birefringent plate 320 carries out shift operation when the incident light is P-polarization. Consequently, R light beam of S-polarization which has been incident on the birefringent plate 320 is emitted from the birefringent plate 320 without shifting. As a result, the non-pixel shift state image is displayed on the screen.

At point B of FIG. 3, the following operation is carried out. As shown in FIG. 4B, R light beam of P-polarization is emitted from the transmission type LCD 210. The R light beam is first incident on the R element portion 310R of the wavelength selectable polarization rotation device 310. ON voltage is applied to the R element portion 310R. For this reason, R light beam of P-polarization which has been incident on the R element portion 310R has the polarization direction not rotated and R light beam of P-polarization is emitted from the R element portion 310R. The R light beam of P-polarization is incident on the G element portion 310G. The G element portion 310G is involved with only the G-light beam polarization rotation. Therefore, the R light beam of P-polarization passes through the G element portion 310G without rotating, and is incident on the B element portion 310B. The B element portion 310B is involved with only the B-light beam polarization rotation. For this reason, R light beam of P-polarization passes through the B element portion 310B without rotating. Accordingly, R light beam of P-polarization is emitted from the wavelength selectable polarization rotation device 310. In the present embodiment, the birefringent plate 320 carries out shift operation when the incident light is P-polarization. Consequently, R light beam of P-polarization which has been incident on the birefringent plate 320 is shifted by 1/2 pixel pitch at the birefringent plate 320 and is emitted from the birefringent plate 320. As a result, the pixel shift state image is displayed on the screen.

At point C of FIG. 3, the following operation is carried out. As shown in FIG. 4C, G light beam of P-polarization is emitted from the transmission type LCD 210. The G light beam is first incident on the R element portion 310R of the wavelength selectable polarization rotation device 310. The R element portion 310R is involved with only the R light beam polarization rotation. For this reason, the G light beam of P-polarization passes through the R element portion 310R without rotating and is incident on the G element portion 310G. ON voltage is applied to the G element portion 310G. Therefore, G light beam of P-polarization which has been incident on the G element portion 310G has the polarization direction not rotated, and G light beam of P-polarization is emitted from the G element portion 310G. The B element portion 310B is involved with only the B-light beam polarization rotation. For this reason, G light beam of P-polarization passes through the B element portion 310B without rotating. Therefore, G light beam of P-polarization is emitted from the wavelength selectable polarization rotation device 310. In the present embodiment, the birefringent plate 320 carries out shift operation when the incident light is P-polarization. Consequently, G light beam of P-polarization which has been incident on the birefringent plate 320 is shifted by 1/2 pixel pitch at the birefringent plate 320 and is emitted from the birefringent plate 320. As a result, the pixel shift state image is displayed on the screen.

Now, to see the timing chart of FIG. 3, the control timing (switching timing between ON and OFF states) of each element portion (R element portion, G element portion, and G element portion) does not coincide with the color switching timing of the color wheel. For example, before the timing at which the color wheel begins emission of R light beam, the R element portion makes the transition from the OFF state to the ON state, and after the timing at which the color wheel terminates emission of R light beam, the R element portion makes the transition from the ON state to the OFF state. That is, the switching timing of rotation control of the R element portion is included in the period during which R light beam is not emitted. This kind of control is possible because the R element portion is only involved with rotation control of R light beam and is not involved with rotation controls of G light beam and B light beam. More specifically, this is because the wavelength selectable polarization rotation device 310 provides the color selectivity (wavelength selectivity).

In the case where a polarization rotation liquid crystal cell is used for the light path shift unit (wobbling unit) as is the case with conventional units, the polarization rotation liquid crystal cell has no color selectivity. For this reason, the control timing (switching timing between ON and OFF states) of the polarization rotation liquid crystal cell must be brought to coincide with the color switching timing of the color wheel. However, since the response speed of the polarization rotation liquid crystal cell is not so fast as already described, both shift light beam and non-shift light beam are emitted from the light path shift unit in the transition period (switching period between ON and OFF states) of the polarization rotation liquid crystal cell. Consequently, in the transition period, light beams reach a pixel position adjacent to a proper pixel position, and false color occurs due to color leakage.

Since the wavelength selectable polarization rotation device 310 is used in the present embodiment, there is no need to bring the control timing (switching timing between ON and OFF states) of each element portion (R element portion, G element portion, and B element portion) to coincide with the color switching timing of the color wheel. Therefore, even if the response speed of the wavelength selectable polarization rotation device 310 is not so fast, problems of color leakage, etc. can be prevented. As a result, high-quality image display can be achieved. In addition, because a sufficient margin can be provided to the control timing of the wavelength selectable polarization rotation device 310, control is facilitated.

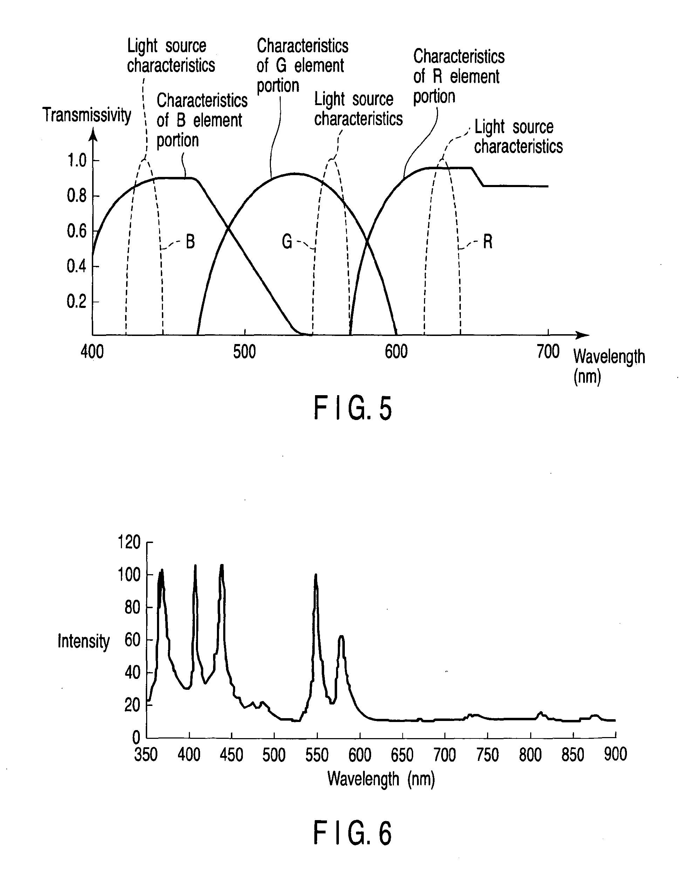

FIG. 5 is a view schematically showing characteristics of the wavelength selectable polarization rotation device and characteristics of the light source unit. As shown in FIG. 5, the band width of R illumination light is narrower than the band width of the R element portion 310R, the band width of G illumination light is narrower than the band width of the G element portion 310G, and the band width of B illumination light is narrower than the band width of the B element portion 310B. In addition, at the overlap portion of the characteristics of the R element portion 310R and the characteristics of the G element portion 310G, and the overlap portion of the characteristics of the G element portion 310G and the characteristics of the B element portion 310B, no wavelength component of illumination light exists.

By selecting the wavelength band of illumination light in such a manner as to achieve the relationship shown in FIG. 5, it is possible to prevent generation of false color arising from the above-mentioned overlap portion, and still higher quality image display is enabled.

In order to satisfy the above-mentioned characteristics, it is effective to use, for example, an ultra-high pressure mercury lamp. FIG. 6 shows the spectral distribution characteristics of the ultra-high pressure mercury lamp. As clear from FIGS. 5 and 6, the ultra-high pressure mercury lamp has no bright line spectrum in the above-mentioned overlap portion. Consequently, in the case of using the ultra-high pressure mercury lamp, the relationship as shown in FIG. 5 can be satisfied substantially practically.

### (Second Embodiment)

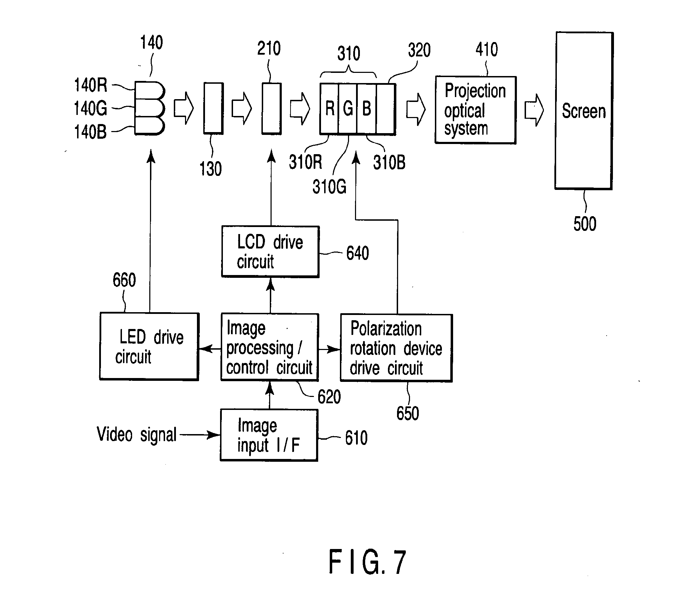

FIG. 7 is a diagram showing a configuration of an image display device according to a second embodiment of the present invention. Since the basic configuration is the same as the first embodiment, the functional components corresponding to those shown in the first embodiment are denoted by the same reference numerals, and the detailed description thereof is omitted.

In the present embodiment, an LED light source 140 is used for the light source unit. The LED light source 140 is composed of a red LED 140R, a green LED 140G, and a blue LED 140B. The LED 140R, LED 140G and LED 140B successively emit light by drive signals from an LED drive circuit 660. In synchronism with the light-emitting timing of the LED 140R, LED 140G and LED 140B, R-image, G-image, and B-image are displayed on the transmission type LCD 210. As a result, R modulated light, G modulated light, and B modulated light are emitted from the transmission type LCD 210. Other basic configuration and operation are same as those of the first embodiment.

In the embodiment as well, effects similar to those of the first embodiment can be obtained, and high-quality image display can be achieved. In addition, since a light emission wavelength band of each LED is narrow, the relationship as shown in FIG. 5 can be easily satisfied in the present embodiment. (Third Embodiment)

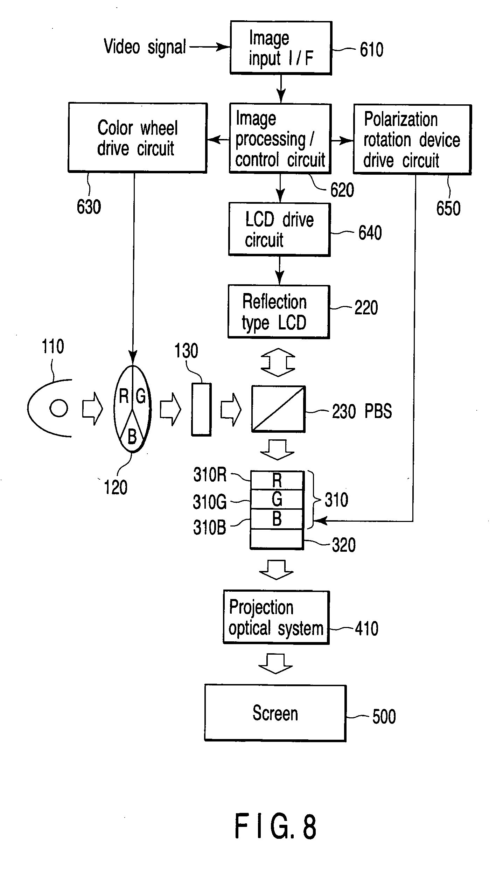

FIG. 8 is a diagram showing a configuration of an image display device according to a third embodiment of the present invention. Since the basic configuration is the same as the first embodiment, the functional components corresponding to those shown in the first embodiment are denoted by the same reference numerals, and the detailed description thereof is omitted.

Although in the first embodiment, the transmission type LCD 210 is used as the image modulation unit, a reflection type LCD 220 is used as the image modulation unit in the present embodiment. Specifically, emission light (S-polarization in the present embodiment) from the P/S converter 130 is incident on the reflection type LCD 220 via a polarized beam splitter (PBS) 230. In the reflection type LCD 220, modulated light (image light) modulated in accordance with input video signals (input image signals) is generated. The modulated light (P-polarization) generated is incident on the wavelength selectable polarization rotation device 310 via the PBS 230. Other basic configuration and operation are same as those of the first embodiment.

In the present embodiment as well, the effects same as those of the first embodiment can be obtained and high-quality image display can be achieved.

### (Fourth Embodiment)

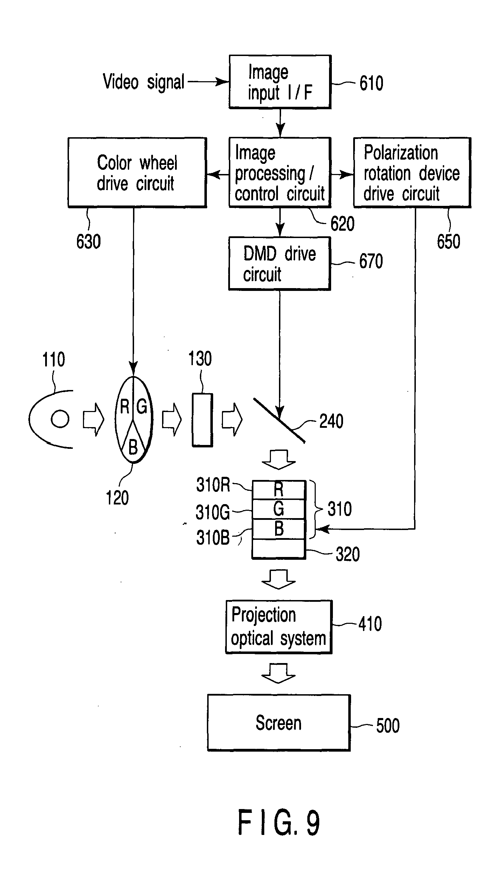

FIG. 9 is a diagram showing a configuration of an image projection device according to a fourth embodiment of the present invention. Since the basic configuration is the same as the first embodiment, the functional components corresponding to those shown in the first embodiment are denoted by the same reference numerals, and the detailed description thereof is omitted.

In the present embodiment, a digital micromirror device (DMD) 240 is used as the image modulation unit. By driving the DMD 240 by a DMD drive circuit 670, modulated light (image light) modulated in accordance with input video signals (input image signals) is generated, and the modulated light generated is incident on the wavelength selectable polarization rotation device 310. Other basic configuration and operation are same as those of the first embodiment.

Also in the present embodiment, the effects same as those of the first embodiment can be obtained and high-quality image display can be achieved.

### (Fifth Embodiment)

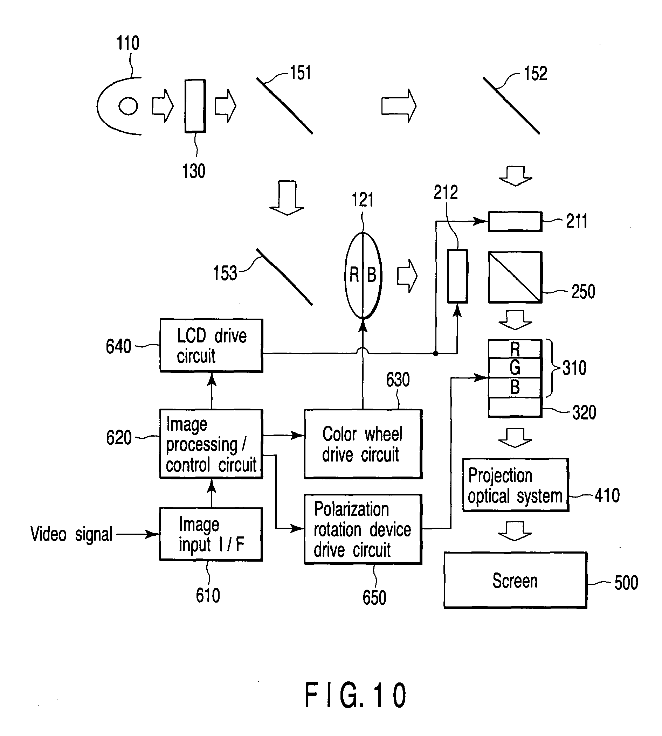

FIG. 10 is a diagram showing a configuration of an image projection device according to a fifth embodiment of the present invention. Since the basic configuration is the same as the first embodiment, the functional components corresponding to those shown in the first embodiment are denoted by the same reference numerals, and the detailed description thereof is omitted.

Although in the first embodiment, a single plate type LCD (transmission type LCD 210) is used as the image modulation unit, two-plate type LCDs (transmission type LCDs 211 and 212) are used as the image modulation unit in the present embodiment. Now, the configuration and operation of the present embodiment will be described with reference to FIG. 10.

White light from the illumination unit 110 is incident on the P/S converter 130, and S-polarization light is emitted from the P/S converter 130. The light emitted from the P/S converter 130 is separated into a G light component and R and B light components by a dichroic mirror 151.

The G light beam is reflected by a mirror 152 and is incident on the transmission type LCD 211. In the transmission type LCD 211, G-modulated light (G-image light) modulated in accordance with input video signals (input image signals) are generated by the drive signals from the LCD drive circuit 640.

R light beam and B light beam are reflected by a mirror 153 and are incident on a color wheel 121. Although the basic configuration and operation of the color wheel 121 are same as those of the first embodiment, the color wheel 121 of the present embodiment is divided into two portions: an R filter portion and a B filter portion. That is, by the rotation of the color wheel 121, R light beam and B light beam are successively emitted from the color wheel 121. The R light beam and B light beam emitted from the color wheel 121 are successively incident on the transmission type LCD 212. In the transmission type LCD 212, R modulated light (R-image light) and B modulated light (B-image light) modulated in accordance with input video signals (input image signals) are successively generated by drive signals from the LCD drive circuit 640.

The G modulated light emitted from the transmission type LCD 211 and the R modulated light and B modulated light emitted from the transmission type LCD 212 are incident on the wavelength selectable polarization rotation device 310 via a dichroic prism 250. The R modulated light and B modulated light are displayed by time sharing. For this reason, in the case where a polarization rotation liquid crystal cell is used as a polarization rotation device as is the case with conventional units, false color occurs due to color leakage of the R modulated light and B modulated light. In the present embodiment, with respect to the R modulated light and B modulated light, the control same as the first embodiment is carried out for the wavelength selectable polarization rotation device 310. Thereby, the problem of false color due to color leakage can be prevented.

In this way, in the present embodiment as well, the effects same as those of the first embodiment can be obtained and high-quality image display can be achieved.

### (Sixth Embodiment)

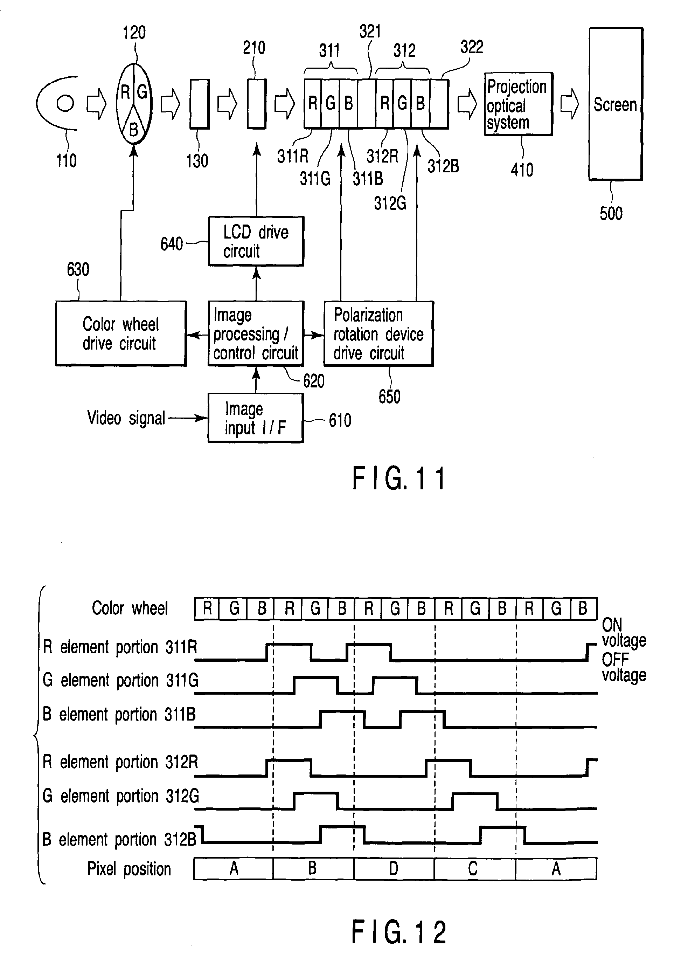

FIG. 11 is a diagram showing a configuration of an image projection device according to a sixth embodiment of the present invention. Since the basic configuration is the same as the first embodiment, the functional components corresponding to those shown in the first embodiment are denoted by the same reference numerals, and the detailed description thereof is omitted.

While the first embodiment relates to an image projection device of two point pixel shift, the present embodiment relates to an image projection device of four point pixel shift. Specifically, two wavelength selectable polarization rotation devices 311 and 312 and two birefringent plates 321 and 322 are provided as the light path shift unit.

Both the wavelength selectable polarization rotation devices 311 and 312 have functions similar to those of the wavelength selectable polarization rotation device 310 shown in the first embodiment. Two polarization directions of modulated lights which are rotation-controlled by the wavelength selectable polarization rotation device 311 are, respectively, substantially parallel to the two polarization directions of modulated lights which are rotation-controlled by the wavelength selectable polarization rotation device 312. In addition, the crystal axis of the birefringent plate 321 and the crystal axis of the birefringent plate 322 are substantially vertical to each other. Specifically, in the birefringent plate 321, no shift operation is carried out in the case where the incident light is S-polarization (perpendicular polarization direction in the present embodiment) while shift operation in the horizontal direction is carried out in the case where the incident light is P-polarization (horizontal polarization direction in the present embodiment). In the birefringent plate 322, no shift operation is carried out in the case where the incident light is P-polarization while shift operation is carried out in the case where the incident light is S-polarization.

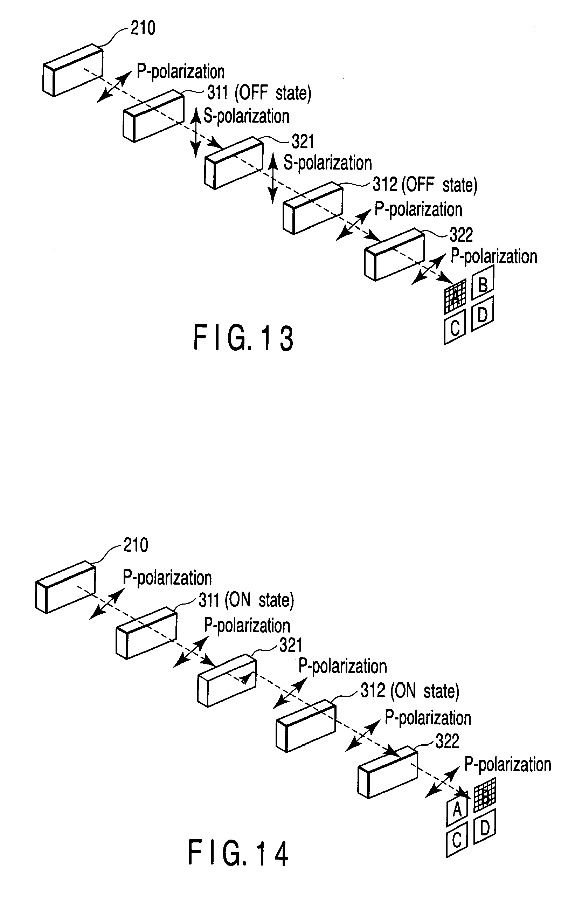

Hereinafter, referring now to FIGS. 12 and 13 to 16, the operation of the image projection device according to the present embodiment will be described. FIG. 12 is a timing chart, and FIGS. 13 to 16 are views that illustrate the operation.

As shown in FIG. 12, R, G, and B illumination lights are successively emitted from the color wheel 120. The pixel shift state is controlled by the light path shift unit composed of the wavelength selectable polarization rotation devices 311 and 312 and birefringent plates 321 and 322. As a result, images of pixel position A, pixel position B, pixel position D, and pixel position C are successively displayed on the screen (see FIGS. 13 to 16), and four-point pixel shift image display is carried out. Hereinafter, details of the shift operation will be described with reference to FIGS. 12 and 13 to 16.

FIG. 13 is a view showing operation when an image is displayed at the pixel position A. From the transmission type LCD 210, R-image light (R modulated light) of P-polarization is emitted and is incident on the polarization rotation device 311. OFF voltage is applied to the R element portion 311R of the polarization rotation device 311. For this reason, the image light polarization is rotated by 90 degrees, and image light of S-polarization is emitted from the polarization rotation device 311. The image light of S-polarization which has been incident on the birefringent plate 321 is not shifted at the birefringent plate 321 and is emitted from the birefringent plate 321. OFF voltage is applied to the R element portion 312R of the polarization rotation device 312. For this reason, the image light of S-polarization is rotated by 90 degrees, and image light of P-polarization is emitted from the polarization rotation device 312. The image light of P-polarization which has been incident on the birefringent plate 322 is emitted from the birefringent plate 322 without being shifted at the birefringent plate 322. Note that an arrow mark in FIG. 13 indicates the polarization direction of each image light. This same principle also applies to FIGS. 14 to 16.

In this way, the R-image light reaches the pixel position A on the screen. The same operation is carried out on the G-image light and B-image light as well. As a result, R-image light, G-image light, and B-image light successively reach the pixel position A on the screen.

FIG. 14 is a view showing operation when an image is displayed at the pixel position B. From the transmission type LCD 210, R-image light (R-modulated light) of P-polarization is emitted and is incident on the polarization rotation device 311. ON voltage is applied to the R element portion 311R of the polarization rotation device 311. For this reason, the image light polarization is not rotated, and image light of P-polarization is emitted from the polarization rotation device 311. The image light of P-polarization which has been incident on the birefringent plate 321 is shifted in the horizontal direction at the birefringent plate 321 and is emitted from the birefringent plate 321. ON voltage is applied to the R element portion 312R of the polarization rotation device 312. Consequently, the image light of P-polarization is not rotated, and image light of P-polarization is emitted from the polarization rotation device 312. The image light of P-polarization which has been incident on the birefringent plate 322 is emitted from the birefringent plate 322 without being shifted at the birefringent plate 322.

In this way, the R-image light arrives at the pixel position B on the screen. The same operation is carried out for the G-image light and B-image light. As a result, R-image light, G-image light and B-image light successively arrive at the pixel position B on the screen.

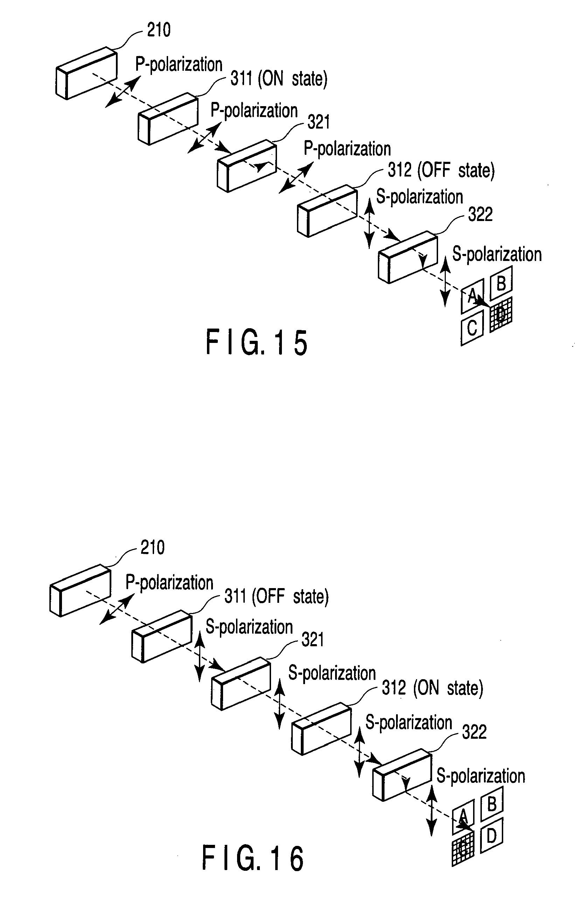

FIG. 15 is a view showing operation when an image is displayed at the pixel position D. From the transmission type LCD 210, R-image light (R-modulated light) of P-polarization is emitted and is incident on the polarization rotation device 311. ON voltage is applied to the R element portion 311R of the polarization rotation device 311. For this reason, the image light polarization is not rotated, and image light of P-polarization is emitted from the polarization rotation device 311. The image light of P-polarization which has been incident on the birefringent plate 321 is shifted in the horizontal direction at the birefringent plate 321 and emitted from the birefringent plate 321. OFF voltage is applied to the R element portion 312R of the polarization rotation device 312. Consequently, the image light of P-polarization is rotated by 90 degrees, and image light of S-polarization is emitted from the polarization rotation device 312. The image light of S-polarization which has been incident on the birefringent plate 322 is shifted in the vertical direction at the birefringent plate 322 and emitted from the birefringent plate 322.

In this way, the R-image light reaches the pixel position D on the screen. The same operation is carried out for the G-image light and B-image light. As a result, R-image light, G-image light, and B-image light successively arrive at the pixel position D on the screen.

FIG. 16 is a view showing operation when an image is displayed at the pixel position C. From the transmission type LCD 210, R-image light (R-modulated light) of P-polarization is emitted and is incident on the polarization rotation device 311. OFF voltage is applied to the R element portion 311R of the polarization rotation device 311. For this reason, the image light polarization is rotated by 90 degrees, and image light of S-polarization is emitted from the polarization rotation device 311. The image light of S-polarization which has been incident on the birefringent plate 321 is emitted from the birefringent plate 321 without being shifted at the birefringent plate 321. ON voltage is applied to the R element portion 312R of the polarization rotation device 312. Consequently, the image light of S-polarization is not rotated, and image light of S-polarization is emitted from the polarization rotation device 312. The image light of S-polarization which has been incident on the birefringent plate 322 is shifted in the vertical direction at the birefringent plate 322 and emitted from the birefringent plate 322.

In this way, the R-image light reaches the pixel position C on the screen. The same operation is carried out for the G-image light and B-image light as well. As a result, R-image light, G-image light, and B-image light successively arrive at the pixel position C on the screen.

As described above, the present embodiment has the same basic configuration as is the case of the first embodiment, and the basic operation is the same as that of the first embodiment. Accordingly, in the present embodiment as well, the effects same as those of the first embodiment can be obtained, and high-quality image display can be achieved.

Note that configurations of the above-described first to sixth embodiments may be appropriately combined, and even in such a case, the same effects as those described above can be obtained.

As described above, according to the present invention, a wavelength selectable polarization rotation device and a birefringent plate are used as the light path shift unit. Thereby, effects of leakage light can be suppressed, and high-quality image display can be achieved.

## Claims

1. An image display device for displaying an image in accordance with an input image signal, **characterized by** comprising:
a light source unit (100) which successively emits illumination lights of different colors which have wavelength bands different from one another in accordance with color information of an image signal;
an image modulating unit (200) which successively modulates the illumination lights of different colors in accordance with the color information of the image signal and generates modulated lights;
a light path shift unit (300) capable of shifting a light path of the modulated lights modulated by the image modulating unit; and
a projection optical unit (400) which projects the modulated lights from the light path shift unit,
wherein the light path shift unit includes a first wavelength selectable polarization rotation device (310) configured to carry out rotation control on polarization directions of the modulated lights modulated by the image modulating unit in accordance with colors and a first birefringent plate (320) to which the modulated lights from the first wavelength selectable polarization rotation device are applied.

2. The image display device according to claim 1, **characterized in that** the light source unit includes a white light source (110) which emits white light and a color wheel (120) in which a plurality of color filters having different wavelength bands are arranged in the rotating direction, and
by applying the white light to the color filters as the color wheel rotates, the illumination lights of different colors are successively emitted from the color wheel.

3. The image display device according to claim 1,
**characterized in that** the first wavelength selectable polarization rotation device switches colors to undergo rotation control on the polarization direction in accordance with colors of the illumination lights emitted from the light source unit.

4. The image display device according to claim 1, **characterized in that** the first wavelength selectable polarization rotation device comprises a stack of layers which perform rotation control on the polarization directions of lights of different colors, respectively.

5. The image display device according to claim 1, **characterized in that** the first wavelength selectable polarization rotation device switches rotation control on the polarization direction for a certain color when the light source unit does not emit the illumination light of the certain color.

6. The image display device according to claim 1, **characterized in that** the two polarization directions of modulated light to undergo rotation control by the first wavelength selectable polarization rotation device are substantially vertical to each other.

7. The image display device according to claim 6, **characterized in that** the light path shift unit further includes: a second wavelength selectable polarization rotation device (312) configured to carry out rotation control on polarization directions of the modulated lights emitted from the first birefringent plate (321) in accordance with colors; and a second birefringent plate (322) to which the modulated lights from the second wavelength selectable polarization rotation device are applied,
two polarization directions of modulated light to undergo rotation control by the second wavelength selectable polarization rotation device are substantially parallel to two polarization directions of modulated light to undergo rotation control by the first wavelength selectable polarization rotation device (311), respectively, and
a crystal axis of the first birefringent plate and a crystal axis of the second birefringent plate are substantially vertical to each other.

8. The image display device according to claim 1, **characterized in that** a band width of each color of the illumination light emitted from the light source unit is narrower than that of each color to undergo rotation control on the polarization direction by the first wavelength selectable polarization rotation device.

9. The image display device according to claim 8, **characterized in that** the light source unit has an LED light source (140) which emits illumination light of at least three colors.

10. The image display device according to claim 8, **characterized in that** the light source unit has a white light source (110) which emits white light,
each of wavelength bands of colors to undergo rotation control on the polarization direction by the first wavelength selectable polarization rotation device overlaps the other one of the wavelength bands, and
the white light source has no bright line spectrum at the overlapped portion.
